# EUROPEAN PATENT APPLICATION

(11) **EP 1 403 764 A1**
(43) Date of publication of application: **31.03.2004**
(21) Application number: 02021572.9
(22) Date of filing: 26.09.2002
(51) Int. Cl.: G06F 9/45, G06F 9/44

(54) **Method and computer system for dynamic data type enrichment**

(71) Applicant: SAP Aktiengesellschaft, 69190 Walldorf (DE)
(72) Inventor: Hammerich, Reiner, 69231 Rauenberg (DE)

(57) **Abstract**

A method, computer program product and computer system for dynamic data type enrichment. A predefined application program (210) uses (410) at least one basic data type (110). At runtime, when the application program (210) is executed, the computer system (900) adds (420) metadata (150) to the at least one basic data type (110).

## Description

### Field of the Invention

The present invention relates to electronic data processing.

### Background of the Invention

Using metadata to describe other data is known in the art. For example, metadata provides additional information about a specific data type. To describe a specific data type, such as customer_number, the corresponding metadata may include a text label (e.g., "cust. no."), a range of allowed values (e.g., 0001 to 9999), constraints or any other data that further specifies the specific data type. When a data field (e.g., CUSTNR) used in an application gets assigned the specific data type (e.g., customer_number) the data field automatically has access to the corresponding metadata (e.g., text label, value range, etc.)

For example, metadata can be stored in a metadata store, such as a data dictionary. In a data dictionary specific metadata is combined with a specific data type at design time. This supports the reuse of data type definitions in software applications because it is convenient for an application developer to automatically use metadata definitions for a data field of the application at runtime by simply assigning a specific data type to the data field at design time.

Further, dictionary based services can be defined on top of the metadata. Examples of dictionary based services are value help, context sensitive help or validation rules.

The use of metadata facilitates achieving consistency throughout an application because wherever a specific data type is used the application program behaves as defined by the metadata associated with the specific data type.

A problem occurs when the metadata is modified while an application program is running that uses the metadata. In this case an application program that references affected metadata definitions usually causes a system failure.

Further, in some applications, such as portal applications, typically the system environment often changes as new systems are added or obsolete systems are removed. This implies permanent changes of the corresponding metadata while the application typically stays up and running and does not go through an implementation phase to adopt to the changes of the metadata.

### Summary of the Invention

It is an object of the present invention to solve the problem of computer system failure when using metadata that does not match anymore with data types being used in a runtime environment of an application.

Therefore, the present invention provides a computer implemented method for dynamic data type enrichment according to claim 1, including the following steps:
i) using at least one basic data type in a predefined application program; and
ii) adding metadata to the at least one basic data type at runtime when the application program is executed.

By adding metadata to a basic data type at runtime the application program becomes robust with regards to changes in the metadata.

Further embodiments of the invention are a computer system according to claim 12 and a computer program product according to claim 11.

The aspects of the invention will be realized and attained by means of the elements and combinations particularly pointed out in the appended claims. It is to be understood that both, the foregoing general description and the following detailed description are exemplary and explanatory only and are not restrictive of the invention as described.

### Brief Description of the Drawings

- FIG. 1: is a simplified block diagram of a computer system for dynamic data type enrichment according to one embodiment of the present invention;
- FIG. 2: illustrates details of an application program run by the computer system and interacting with a data dictionary;
- FIG. 3: is a simplified flowchart of a method for dynamic data type enrichment according to one embodiment of the present invention; and
- FIG. 4: is a simplified block diagram of an integrated development environment for developing application programs according to the present invention.

### Detailed Description of the Invention

The same reference numbers are used throughout the drawings to refer to the same or like parts.

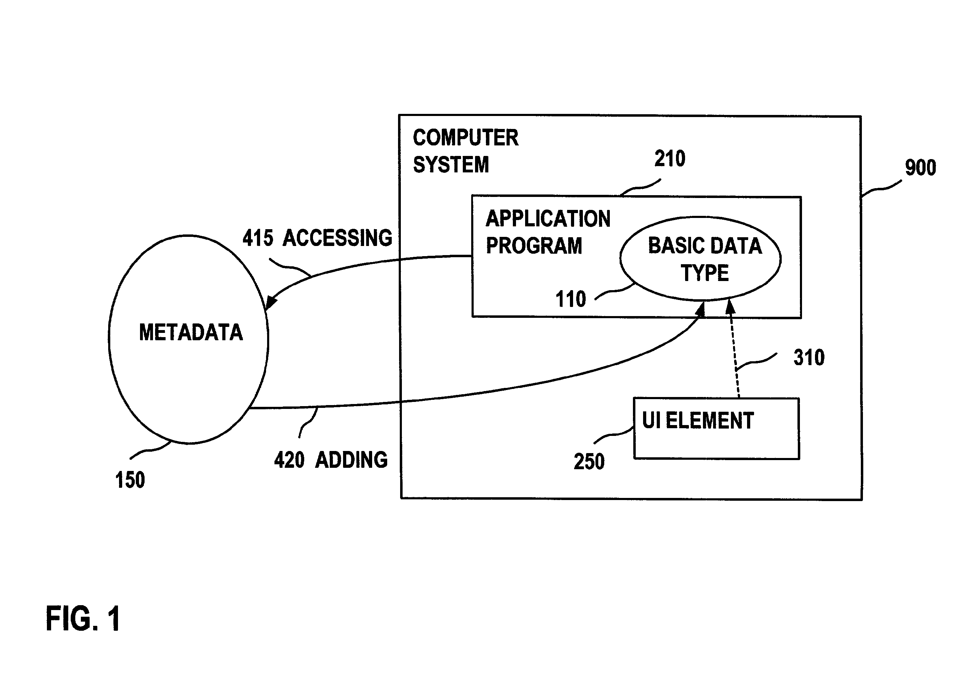

FIG. 1 is a simplified block diagram of an exemplary computer system 900 for dynamic data type enrichment according to one embodiment of the present invention.

The computer system 900 stores a predefined application program 210 in a memory. For example, the application program 210 is developed by a software developer in a conventional programming language, such as Java, Java Script, Visual Basic, C, C++ or in a descriptive programming language such as HTML, XHTML, XML or any other programming language and then loaded into the memory. The application program 210 uses at least one basic data type 110, such as "character", "string", "integer" or any other basic data type that is typically defined in the programming language of the application program 210.

A user interface (UI) element 250 references 310 the basic data type 110. UI elements are components of, for example, a graphical user interface (GUI) or a voice user interface of an application to define the visual/audio presentation of the application to the user. An example of a UI element used in a GUI is an input field where a user can enter, for example, a customer number. An example of a UI element in a voice user interface is a pre-recorded question that prompts the user to input the customer number through a microphone.

Typically, a UI element that references basic data types instead of specific data types (e.g., customer number) is portable to multiple development platforms using different programming languages because many programming languages use basic data types, such as "integer" or "string".

A processor of the computer system 900 can execute the application program 210 and prompt the user with the UI element 250. For example, the UI element is visualized on a display device of the computer system or a corresponding sound sequence is generated through a speaker of the computer system. The user can interact with the UI element 250, for example, by clicking on the UI element to request a value help in form of a drop down list box. In response to this interaction the application program 210 accesses 415 the corresponding metadata 150 and adds 420 the metadata 150 to the data type 110 at runtime. The metadata 150 includes additional information for the basic data type 110 as it is used in the application program. For example, if the UI element is an input field for a customer number having the basic data type "string" the metadata 150 can include additional information about the customer number, such as a text label for the corresponding input field, the allowed value range of customer numbers or any other information that relates to the customer number, such as a value help for generating a list of all existing customer numbers with the corresponding customer names. Adding the metadata 150 to the basic data type 110 at runtime makes all the additional information (metadata details) of the metadata available for the UI element 250 at the user interface level.

The metadata 150 can be stored on a storage device that is part of the computer system 900 (e.g., a hard disk) or can be stored on any other storage device that can communicate with computer system 900. Typically the metadata 150 is stored together with further metadata in a metadata store. Once the metadata 150 has been retrieved by the computer system 900 from the metadata store, the metadata 150 can be copied to a metadata cache of the computer system 900. In case the metadata 150 is requested again by the application program 210 at a later point in time, the metadata can be retrieved from the metadata cache instead of retrieving the metadata again from its original metadata store.

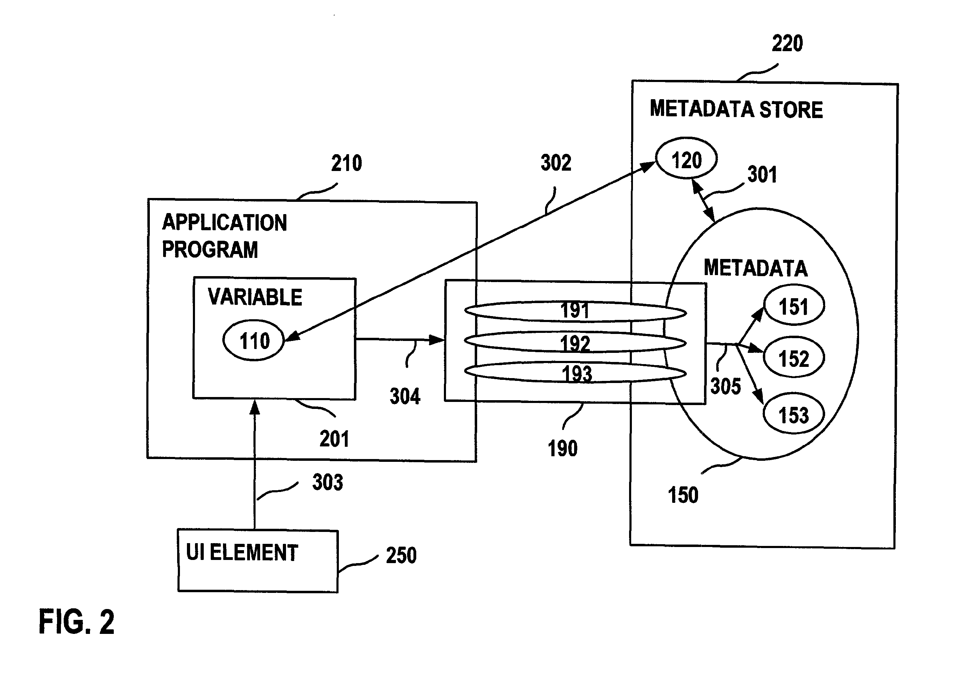

FIG. 2 illustrates details of the application program 210 run by the computer system 900 and interacting with a metadata store 220. In the following description a data dictionary is used as an example of the metadata store 220. The metadata store 220 can also be implemented as a file, document or any other appropriate data structure.

The UI element 250 is bound 303 to a variable 201 of the application program 210. The variable 201 has the basic data type 110. Referring back to the example used in the description of FIG. 1, the UI element corresponds to an input field "customer number". For example, the corresponding variable 201 "custnr" can have the basic data type 110 "string". The application program 210 provides a mapping 302 between the basic data type "string" and a specific data type 120. The specific data type 120 is defined in the data dictionary 220.

For example, the mapping 302 can be implemented by defining the variable 201 including a name (e.g., "custnr"), the basic data type 110 and the specific data type 120. In another implementation the variable 201 has a reference to a basic variable that defines the name and the basic data type and a further reference to the specific data type. In a still further embodiment the mapping 302 can be implemented through a data mapping structure, such as a table or a structured document (e.g., XML document). The data mapping structure is part of the application program.

For example, the specific data type 120 is "customer_number". The metadata 150 is associated 301 with the specific data type "customer_number". The metadata 150 can include data type details 151, 152, 153. For example, the first metadata detail 151 is a text label "CUSTOMER NO." for the input field, the second metadata detail 152 is the allowed value range (e.g., 0001 to 9999) for customer numbers and the third metadata detail is a list of all existing customer numbers with the corresponding customer names (e.g., 0001/CUST_A, 0002/CUST_B, etc.) The third metadata detail 153 can also refer to a function that generates the list dynamically (e.g., from a customer master data table) in response to a corresponding user interaction.

The metadata details 151, 152, 153 are exposed to the application program 210 and its variable 201 through an application programming interface (API) 190 in the form of metadata services 191, 192, 193, respectively. For example, when an application developer develops the application program 210 at design time by using an integrated development environment (IDE), he/she can use metadata services that are visible through the API 190 to access the metadata 150 at runtime. The metadata 150 itself is not visible to the application developer.

The application program 210 uses the application programming interface 190 to access 415 the metadata 150. For example, the application program calls 304 the metadata services 191, 192, 193 that relate to the basic data type 110. Metadata services can be implemented, for example, using classes or class interfaces of the programming language of the application program 210.

For attaching the first metadata detail 151 to the variable at runtime a pseudo code example is given in coding section 1.

Coding section 1:
// someMetaStore is any instance that can retrieve
// a text label, such as a data dictionary
// or another instance loading data from a file
// or a backend system
   LabelText = someMetaDataStore.getLabel(...);
// custnr is the variable that combines the
// current value and the metadata for
// the customer number. TypeService defines the
// the metadata services for custnr.
   TypeService = custnr.getTypeService();
// The first metadata detail 151 (LabelText) is
// attached to the variable custnr.
   TypeService.setLabelText(LabelText);

Coding section 1 illustrates how the usage of metadata is separated from the storage of metadata through the API 190 and its metadata services. This enables the runtime environment of the application program 210 to dynamically add the metadata to corresponding variables of the application program 210.

For example, the first metadata service 191 is called when the UI element 250 is presented to the user to present the text label (first metadata detail 151) next to the input field. A corresponding pseudo code example for using the first metadata service 191 from within the application program 210 is given in coding section 2. The variable "custnr" combines the current value with the corresponding metadata of the customer number. "Inputfield" stands for the UI element that is used to enter the customer number. "LabelForInput" is the label that is placed close to the "Inputfield" in a graphical user interface.

Coding section 2:
// Define metadata services for variable custnr TypeService = custnr.getTypeService();
// Define variable LabelText for first metadata
// detail 151.
   LabelText = TypeService.getTextLabel();
// Retrieve the value of the variable custnr for
// display in the UI element.
   Inputfield.setText(custnr.getData());
// Provide the UI element with the corresponding
// metadata values (LabelText) of the variable
// custnr.
   LabelForInput.setText(LabelText);

Coding section 3 is a pseudo code example for adding the second and third metadata details 152, 153, accordingly.

Coding section 3:
TypeService=custnr.getTypeService();
TypeService.setValueRange(0,9999);
ValueList = TypeService.getValueList();
ValueList.clear();
ValueList.addValue("0001", "CUST_A");
ValueList.addValue("0002", "CUST_B");
ValueList.addValue("...", "...");

The basic data type 110 of the variable 201 is enriched by metadata details from the metadata store 220 (e.g., data dictionary) at runtime. By using the API 190, metadata can be retrieved from any further computer system (e.g., a backend system) that can communicate with the computer system 900, for example, over a network (e.g., a local area network (LAN), a wide area network (WAN) or the Internet). Changes in the metadata are automatically considered by the application program 210 (e.g., a portal application program) in the computer system 900 without changes in the computer system 900. When metadata changes occur, prior art computer systems that use and generate the metadata at design time require either a system restart or a regeneration of corresponding classes at runtime. A system restart usually is not an option for some application programs (e.g., portal application programs). Class regeneration at runtime is an error-prone procedure in some programming languages, such as Visual Basic, Java or C++ and has a negative impact on the user interaction because during the class regeneration the computer system typically does not respond to user requests.

In one embodiment of the present invention the metadata 150 is stored in a private instance of the data dictionary 220 together with the application. In other words, a user can perform actions, such as personalizing the application program 210, that lead to changes in the metadata 150. These changes typically are not meant to have any impact on other users of the application program and, therefore, are stored in a private instance of the data dictionary 220.

In another embodiment of the invention the metadata 150 is stored in a shared instance of the data dictionary 220. This embodiment can be used for example, when customizing the application program 210 and the customizing leads to changes in the metadata 150 that are relevant to all users of the application program 210.

In another embodiment of the invention the metadata 150 is stored in a backend system. This embodiment can be used for example, when an application program executes on a backend system and the user interface is assembled in a different system, such as a portal system using a portal runtime framework.

The present invention enhances the concept of static metadata that is based on statically linking UI elements to metadata. For example, in the context of a model view controller (MVC) design pattern this means that the view that includes the UI elements of the application is directly linked to metadata in the data dictionary (e.g., by using the metadata that are associated with a specific data type which is assigned to the data source of the corresponding UI element). The concept of dynamic metadata allows one to decouple the UI elements from the data dictionary by introducing a mapping layer at the level of an application program. The mapping layer defines how to map basic data types to corresponding metadata at runtime. The mapping layer is robust with regards to changes in the metadata.

Further, a computer system according to an embodiment of the present invention is also useful for an application developer who develops application programs for portal applications to solve the problems a), b) and/or c) that are listed below. One purpose of a portal application is to create a single point of entry for all kind of applications that are either hosted by the portal or by backend systems. Typically, portal applications try to integrate multiple backend systems of various software vendors running on different platforms and different release versions. Static use of data dictionary information in such an environment is unreliable because:
a) the application developer may not know the current release version of any backend system software,
b) the application developer may not know the names of all specific data types used in a specific backend system, and
c) the application developer may not be able to predict how an application user will customize or personalize a backend system.

For example, if the length of a customer number is changed in a backend system from 15 to 20 characters, the application user expects a portal application using a customer number input field to accept an entry having 20 characters without further customizing of the portal application. Another example is modifying a lot of text labels in a backend system to meet the requirements of a specific industry. In this case the application user expects to see automatically the modified text labels in the portal applications, which is the case when using a computer system that implements the present invention.

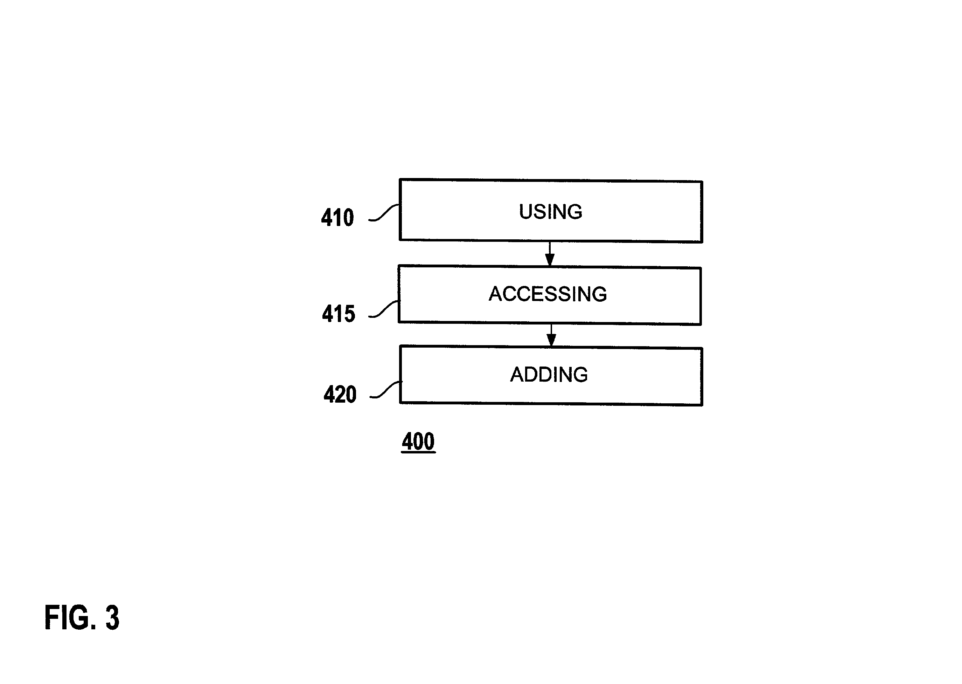

FIG. 3 is a simplified flowchart of a method 400 for dynamic data type enrichment according to one embodiment of the present invention.

Summarizing the present invention the method 400 includes the steps providing 410, accessing 415 and adding 420 that are performed in the following order.

In the using step 410, predefined application program 210 uses at least one basic data type 110. The basic data type 110 is defined in a programming language used by the application program 210. For example, the application program 210 can be developed at design time by an application developer using an integrated development environment (IDE). In another implementation the application program can be generated at design time by a corresponding code generator, for example, by transforming a declarative description of the application program into corresponding program instructions. At runtime, the application program 210 is loaded into a memory of the computer system 900.

In the accessing step 415, the application program 210 uses an application programming interface 190 for accessing metadata 150 that relate to the at least one basic data type 110. For example, the metadata 150 is associated with a specific data type 120 defined in a metadata store 210. The application program 210 provides a mapping 302 between the specific data type 120 and the basic data type 110. For example, the application program uses a variable 201 to map 302 the specific data type 120 to the basic data type 110.

In the adding step 420, the computer system 900 adds the metadata 150 to the at least one basic data type 110 at runtime when the application program 210 is executed.

For example, the application program 210 calls at least one metadata service 191 that relates to the basic data type 110 through the application programming interface 190. In one embodiment of the invention, the at least one metadata service 191 copies the metadata 150 to a metadata cache. The metadata services are available to the application developer within the IDE at design time, whereas the metadata is not visible from within the IDE.

In one embodiment of the invention, the metadata 150 is stored in a private instance of the metadata store 220. In another embodiment of the invention the metadata 150 is stored in a shared instance of the metadata store 220.

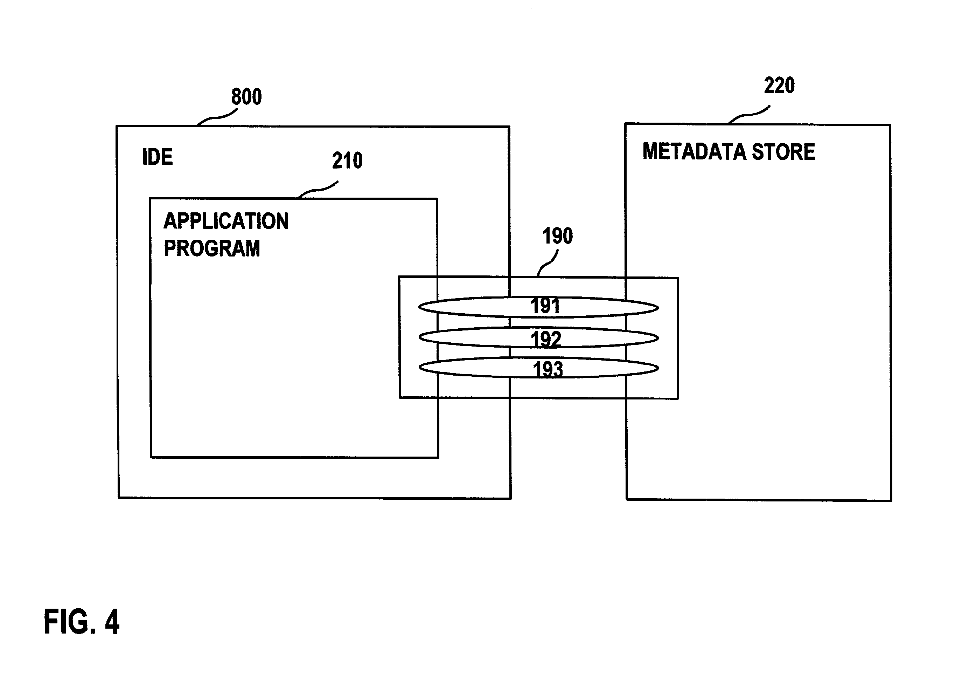

The steps can be performed by the computer system 900 as described in detail under FIGS. 1 and 2. For example, the computer system loads a computer program product into a memory of the computer system 900. The computer program product includes instructions that cause at least one processor of the computer system 900 to execute the steps of the method 400. FIG. 4 is a simplified block diagram of an integrated development environment (IDE) 800 for generating application programs (e.g., application program 210) according to the present invention.

The IDE 800 can be part of the computer system 900 or of any other computer system that is able to deploy the application program 210 to the computer system 900.

The IDE 800 provides an environment to develop and generate application programs, such as the application program 210. At design time, representations of metadata services 191, 192, 193 are made available to an application developer through the API 190 to be used in the application program 210. The application developer can use the representations to define in the application program 210 which metadata (e.g., metadata 150) are to be added to the application program 210 at runtime. The metadata can be stored in any metadata store 220. The metadata store can be unknown to the application developer at design time. The metadata services automatically access a corresponding metadata store at runtime. Even when the metadata store 220 is changed or upgraded at runtime of the application program 210, the metadata services provide the corresponding metadata to the application program before and after the change/upgrade without causing a system failure. This is achieved by a second implementation portion of the metadata services on the side of the metadata store that has no impact on a first implementation portion of the metadata services on the side of the IDE 800. In other words, when the second implementation portion of a metadata service changes on the side of the metadata store, the first implementation portion of the metadata service on the IDE side remains unchanged (e.g., a Java class interface). Therefore, the application program 210 that includes a representation of a metadata service is not affected by changes in the second implementation portion of this metadata service and can use the changed metadata without being restarted or recompiled.

## Claims

1. A method (400) for dynamic data type enrichment comprising the steps:
using (410) at least one basic data type (110) in a predefined application program (210); and
adding (420) metadata (150) to the at least one basic data type (110) at runtime when the application program (210) is executed.

2. The method (400) of claim 1, wherein the application program (210) uses an application programming interface (190) for accessing (415) the metadata (150) before adding (420).

3. The method (400) of claim 2, wherein the application program (210) calls through the application programming interface (190) at least one metadata service (191) that relates to the basic data type (110).

4. The method (400) of claim 3, wherein the at least one metadata service (191) copies the metadata (150) to a metadata cache.

5. The method (400) of anyone of the claims 1 to 4, wherein the basic data type (110) is defined in a programming language used by the application program (210).

6. The method (400) of claim 5, wherein the metadata (150) is associated with a specific data type (120) defined in a metadata store (210).

7. The method (400) of claim 6, wherein the application program (210) provides a mapping (302) between the specific data type (120) and the basic data type (110).

8. The method (400) of claim 6, wherein the application program uses a variable (201) to map (302) the specific data type (120) to the basic data type (110).

9. The method (400) of any of the claims 6 to 8, wherein the metadata (150) is stored in a private instance of the metadata store (220).

10. The method (400) of any of the claims 6 to 8, wherein the metadata (150) is stored in a shared instance of the metadata store (220).

11. A computer program product comprising instructions that when loaded into a memory of a computer system (900) cause at least one processor of the computer system (900) to execute the steps of anyone of the claims 1 to 10.

12. A computer system (900) comprising:
a memory storing an application program (210) that uses a basic data type (110); and
a processor executing instructions to add metadata (150) to the basic data type (110) when executing the application program (210).

13. The computer system (900) of claim 12 further comprising an application programming interface (190) to access (415) the metadata (150) from the application program (210).

14. The computer system (900) of claim 13, wherein the application programming interface (190) provides at least one metadata service (191) that relates to the basic data type (110) used by the application program (210).

15. The computer system (900) of anyone of the claims 12 to 14 further comprising a metadata cache, the at least one metadata service (191) copying the metadata (150) to the metadata cache.

16. The computer system (900) of anyone of the claims 12 to 15, wherein the basic data type (110) is defined in a programming language used by the application program (210).

17. The computer system (900) of claim 16, wherein the metadata (150) are associated with a specific data type (120) defined in a metadata store (210).

18. The computer system (900) of claim 17, wherein the application program (210) provides a mapping (302) between the specific data type (120) and the basic data type (110).

19. The computer system (900) of claim 18, wherein the application program uses a variable (201) to map (302) the specific data type (120) to the basic data type (110).

20. The computer system (900) of anyone of the claims 17 to 19, wherein the metadata (150) is stored in a private instance of the metadata store (220).

21. The computer system (900) of anyone of the claims 17 to 19, wherein the metadata (150) is stored in a shared instance of the metadata store (220).

22. A method for generating an application program (210) comprising the steps:
making available at least one metadata service (191) to be used in the application program (210) at design time for defining how the application program (210) can access metadata (150) at runtime; and
including a first implementation portion of the least one metadata service (191) in the IDE (800) that is unaffected by changes of a second implementation portion of the least one metadata service (191) in a metadata store (220) .

23. An integrated development environment (IDE) (800) for generating an application program (210) by performing the steps of claim 22.

24. A method for changing metadata (150) comprising the steps:
executing an application program (210) that uses at least one metadata service (191) to access the metadata (150) in a metadata store (220);
changing the metadata (150) in the metadata store (220) at runtime of the application program (210); and
using the at least one metadata service (191) in the application program (210) for using the changed metadata without restarting the application program (210).
